Europäisches Patentamt

(19) European Patent Office

Office européen des brevets

(11) **EP 0 706 297 A1**

(12) **EUROPEAN PATENT APPLICATION**

(43) Date of publication:
10.04.1996 Bulletin 1996/15

(51) Int. Cl.$^6$: **H04Q 11/04**, H04L 12/56

(21) Application number: 94480097.8

(22) Date of filing: 07.10.1994

(84) Designated Contracting States:
DE FR GB

(71) Applicant: **International Business Machines
Corporation**
Armonk, N.Y. 10504 (US)

(72) Inventors:
• **Fichou, Aline**
F-06480 La Colle Sur Loup (FR)
• **Iliadis, Ilias**
CH-8803 Ruschlikon (CH)
• **Louis, Philippe**
F-06200 Nice (FR)

• **Galand, Claude**
F-06800 Cagnes Sur Mer (FR)
• **Jacquart, Xavier**
F-06140 Vence (FR)
• **Suffern, Edward**
Chapel Hill, NC 27514 (US)
• **Spagnol, Victor**
FR-06800 Cagnes Sur Mer (FR)

(74) Representative: **Lattard, Nicole
Compagnie IBM France
Département de Propriété Intellectuelle
F-06610 La Gaude (FR)**

(54) **Method for operating traffic congestion control in a data communication network and system for implementing said method**

(57)     The traffic congestion in the switch of a network node made to switch data packets of different priorities from input lines, via receive adapters, to output lines via transmit adapters, is taken care of by using a so-called spacing function whereby the data transfers through the switch are operated at a predefined limited switch speed, said spacing function being overriden whenever high priority traffic occurs or in case of a backpressure signal being generated by the switch to indicate switch operation congestion conditions.

FIG.5

**Description**

Field of the Invention

This invention deals with a method and system for performing traffic congestion control in a data communication network. It addresses more particularly an improvement in performing said congestion control at network node switching level in a packet switching environment.

Background of the Invention

Modern digital networks are made to operate in a multimedia environment for transporting different types of data (pure data or digitized information signals including voice, image, video, etc) over the same network, while ensuring the compliance with the requirements specific to each kind of these traffics.

For instance, one may notice that the information provided by various users can be divided into different types. These include non-real-time information, i. e. information that can be delivered to the corresponding end-user with minor time constrain restrictions ; and real-time information (such as voice information) that must be transmitted to the end-user with a predefined limited time-delay restrictions. If the information is not transferred within said time delay, it should simply be discarded.

This problem has been taken care of, to some extent, by providing techniques such as interpolation/extrapolation techniques, in a data packet transmission environment. However, these techniques provide solutions to overcome the "loss" of only a limited number of discarded consecutive packets. It does not overcome the delay restriction requirement.

Said non-real-time information may include various types of information, e.g. a so-called Non-Reserved information such as control information that arrives periodically in the network. This class of information has no real-time constraint.

On the other hand, one should recall that different techniques have been developed, such as packet switching techniques, whereby the digitized data are arranged into so called bit packets as already mentioned, and circuit switching techniques.

The basic advantage of packet switching techniques as compared to circuit switching techniques, is to allow a statistical multiplexing of the different types of data over a line which optimizes the transmission bandwidth. The drawback of packet switching techniques compared to circuit switching techniques, is that it introduces jitter and delay, which, as already considered, may be detrimental for the transmission of isochronous data, like video or voice. This is why methods have been proposed to control a network in such a way that delays and jitters are bounded for every new connection that is set-up across a packet switched network. For convenience, such a known method is briefly reminded here.

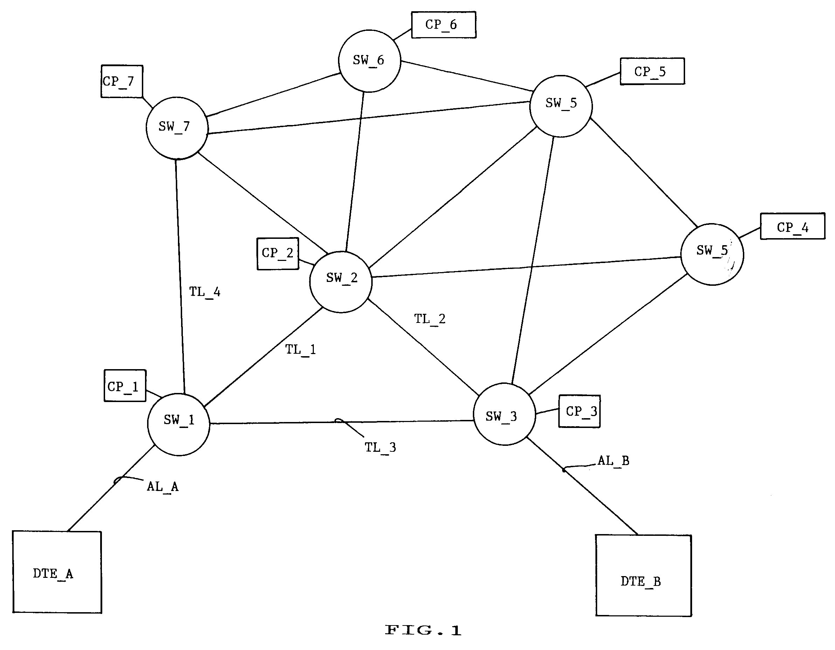

Figure 1 shows a sample packet switching network including seven switching nodes SW_1 to SW_7 interconnected by trunk lines (TL's), that can be accessed by access lines (AL's) connected to outside data terminal equipment (DTE's).

The network control architecture is a distributed one, which means that each switching node is controlled by a control point CP. All CP's are interconnected via a control point spanning tree CPST which provides an efficient means for multicasting control messages between the control points.

When a CP wants to broadcast a message to other CP's in the network, it sends this message to the predefined CPST switching address, and the architecture provides the means to route this message on every line of the CP spanning tree, and only on these lines. This architecture also provides the means to initialize the tree address on each switching node, and to automatically reconfigure the tree in case of line or switching node failure.

Each CP includes a copy of the topology data base that contains information about the network. It includes the network physical configuration, the line characteristics and status. For every line n, in the network, the maximum delay $T(n)$ that can be introduced on a packet with a specified priority, and the level of bandwidth reservation $R\_res(n)$ of this line are defined and recorded in the topology data base. This information is distributed to other control points via topology update messages sent over the control point spanning tree whenever it presents significant changes.

For more information on such a Spanning Tree organization, one may refer to the Copending European Patent Application number 94480048.1 filed on 25 May 1994 with the title "A Data Communication Network and Method for Operating said Network".

Also shown in Figure 1 are user terminal equipment DTE_A and DTE_B which are respectively connected to the network via access lines AL_A and AL_B. This equipment is to be interconnected thru the network with a given quality of service (QoS) specified in terms of a maximum delay T_max and a packet loss probability P_loss.

At the switching node SW_1, the control point CP_1 first uses the QoS and the traffic characteristics specified by the user (peak rate, mean rate, average packet length) to compute the amount of bandwidth C_eq, called the equivalent capacity of the connection, to be reserved on every line, on the route, in order to guarantee a packet loss probability $P\_1(n)$ on this line which is much smaller than the loss probability P_loss that has been specified for the connection.

Based on the information that is available on a line basis in the topology data base, the control point CP_1 then computes the best route in the network to reach the destination. It uses a modified Bellman-Ford algorithm to find the minimum weight, minimum hop count, route from the origin to the destination, which uses eligible lines and which satisfies the QoS.

The detailed algorithms to determine the equivalent capacity parameters and the best route for the considered communication are well known in the art. Besides, they are not required for the claimed invention and, therefore, will not be described further in this application. For additional corresponding information, one may refer to the following publications:

- R. Guérin, H. Ahmadi, M. Naghshineh, "Equivalent Capacity and its Application to Bandwidth Allocation in High Speed Networks", published in IEEE Journal of Selected Areas in Communications, JSAC-7, Sept. 1991.

- H. Ahmadi, J.S. Chen, R. Guérin, L. Gün, A.M. Lee and T. Tedijanto, "Dynamic Routing and Call Control in High-Speed Integrated Network", published in Proc. Workshop Sys. Eng. Traf. Eng., ITC'13 pp 397-403, Copenhagen, Denmark.

But assume that the route goes thru SW_1, SW_2, and SW_3. The origin control point CP_1 then sends a connection set-up message along the route, a copy of which is delivered to the control point of every switch on the route. This message contains a list of the network addresses of the control points on the route, the list of the line names between these control points, the requested bandwidth C_eq, the priority level of the connection, and a connection correlator C_cor which is set by the origin control point CP_1, and which is used by all other CP's to uniquely identify the connection.

Upon reception of the copy of the setup message, each Control Point reserves the bandwidth on the trunk, creates a new entry in the connection table of the adapter, which is used for label swap purposes, and acknowledges back to the origin Control Point CP_1. When CP_1 has received an acknowledge message from every CP on the route, that is CP_2 and CP_3 in the example of Figure 1, it starts the effective transmission of data for the connection.

Besides the reservation of the proper level of bandwidth on each line on the route, meeting the QoS for each connection requires to properly schedule packets with different priorities at each switching point.

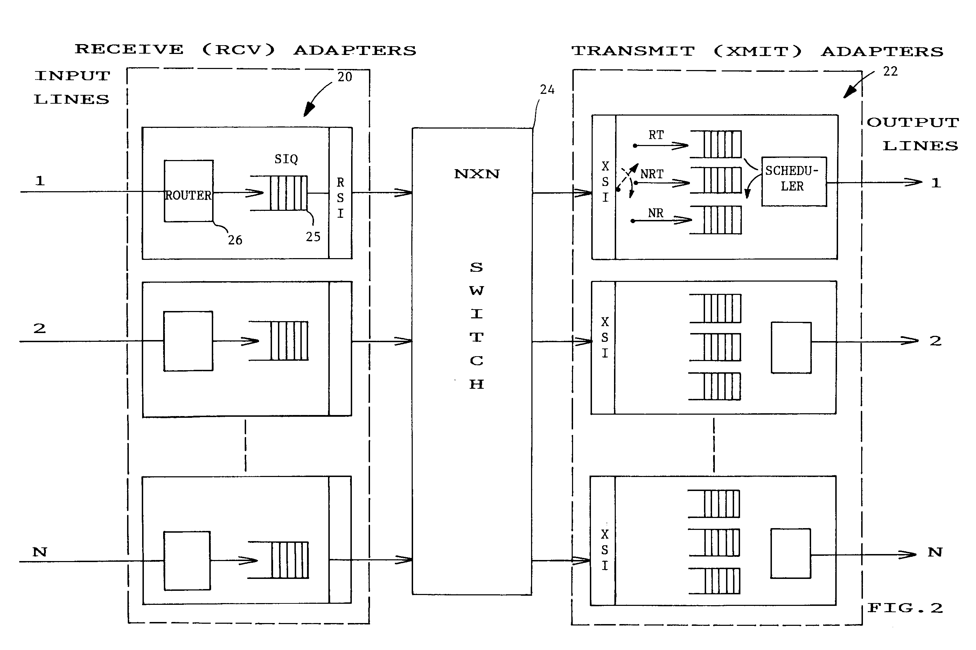

Figure 2 represents a switching node made according to the art. It includes so-called receive adapters (20) which provide interfaces to the input lines numbered 1 through N, and so-called transmit adapter (22) providing output interfacing means to the switching node output lines numbered 1 through N. In practice however receive and transmit adapters might be combined into a single adapter device and be implemented within a same program controlled processor unit. A switch fabric (24) (also herein referred to as "switch") in charge of the communications between input and output adapter means, is also provided.

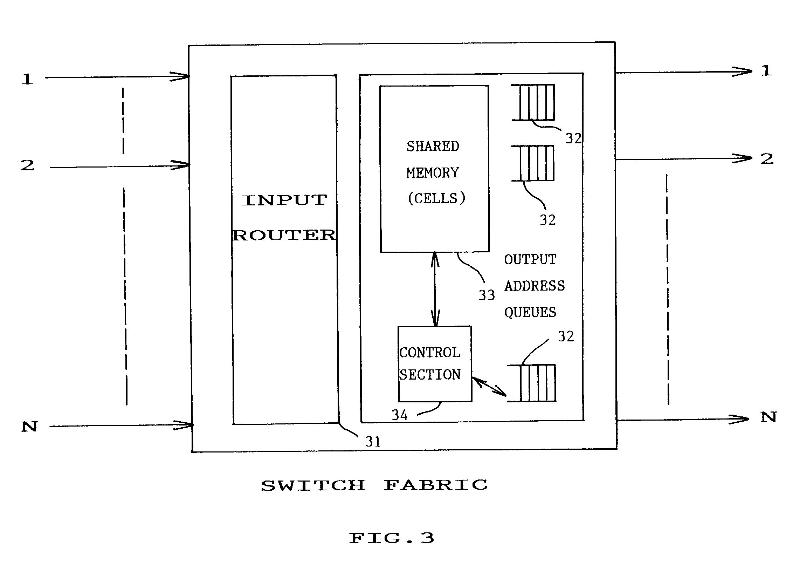

The switching fabric is schematically represented in figure 3. It includes input router means (31) for scanning the receive adapters and feeding output address queues (32) through a shared memory (33). A control section (34) is also provided to control the operation of both the shared memory (33) and the output address queues (32).

As shown in figure 2, the incoming packet is stored in a switch input queue (SIQ) (25) located in the receive adapter (20) which SIQ is served at the switch rate, via a routing device (26). We assume here that the switch is an Asynchronous Transfer Mode (ATM) switch, capable of switching ATM and variable length packets. The packet routing header contains one bit to indicate whether a packet is an ATM packet or a variable length packet. Whenever a packet is of variable length type, it is segmented by the receive switch interface RSI into ATM cells upon servicing the switch input queue SIQ. Then the cells obtained by the segmentation are switched to the transmit adapter where they are finally reassembled into the original packet by the transmit switch interface XSI. Of course, ATM cells are switched natively.

At the transmit adapter of a preferred embodiment of this invention, the packet is enqueued in one of three possible queues, according to its priority (see Figure 2). Three possible traffic priorities are defined, real-time (RT), non-real-time (NRT), and non-reserved (NR). Typically, the highest priority class (RT) is used to transport voice or video, the second class (NRT) is used to transport interactive data, and the third class (NR) is used for file transfer. The real-time RT may itself include traffics of different priority levels (RT1, RT2, etc..). Upon request from the transmit line, a scheduler (27) serves the transmit adapters queues. That means that, at every request for a new packet, the scheduler (27) first looks at the real-time queue and eventually serves a real-time packet. If this queue is empty, then the scheduler (27) looks at the non-real-time queue and eventually serves a non-real-time packet. The non-reserved queue is served only when both real-time and non-real-time queues are empty.

The routing operation at each switching node is implemented as follows. Let's denote by L2 and L3 the label respectively allocated by CP_2 and CP_3 (see figure 1).

At the receive switch adapter, the data packets that are received from the user equipment DTE_A are appended with a network header which contains the label L2, and with a switch routing header that will be used locally by switch SW_1 to route the packet to the desired transmit adapter for transmission over the line TL_1. At the next switch SW_2, the label L2 of each packet is used to look-up a connection table which returns the label L3 and a switch routing header. The packet label L2 is swapped for the new label L3, and the packet is forwarded to the appropriate transmit adapter according to the switch routing header for transmission on line TL_2.

The routing operation is repeated until the packet reaches the last transmit port adapter where the network header is discarded and the packet is sent to the user equipment DTE_B.

Under the assumption that the switch is an ideal switch, that is a switch with an infinite speed (or alternately with a negligible service time), one can show that the above routing operation, combined with the reservation of the equivalent capacity on the transmit trunk, ensure that the connection will meet the pre-specified quality of service parameter (QoS).

In practice, however, the speed of the switch (herein also referred to as switch fabric) must be bounded for technology and cost reasons. This is why some queuing also arises at the switching fabric level (see figure 3).

A switch can route in parallel as many cells as the number of adapters connected. In the switch fabric core, the shared memory is used to store cells, and an address queue per output adapter is required. At every switch cell cycle, the control section (34) looks in a free address table (not shown) and provides as many free addresses as there are adapters connected.

When a cell coming from an adapter "i" enters the switch, it is stored at the corresponding address ; its destination "j" is looked for and a pointer on its address is added to the output address queue "j".

From a performance point of view, two characteristics are very important at switch level, i. e. :

- the speed-up factor, which is defined by the ratio between switch speed and the attached lines speed ;

- the size of the shared memory in the switch fabric core.

Different designs can be implemented in order to optimize the switch behavior, i. e. : a high speed switch or a switch with large memory.

For a speed-up factor equivalent to two times the number of adapters (e. g. : 32 for 16 adapters) considering the same attachments speed on all adapters, it is clear that even with only one cell in the shared memory, the switch can receive/forward, in one cell cycle, a cell from each input adapter. On the other hand, with an infinitely large memory, a cell from each adapter may also be accepted every cycle. A cell destinated to any output adapter is also transmitted. In these two cases, the switch would have an ideal behavior.

But these two ideal solutions are expensive to implement, as a high speed switching medium means expensive high speed adapter interfaces, and extremely large memory is expensive too.

A trade-off between these two solutions must be found, featuring limited speed-up factor and limited memory size. But, contentions may then appear due to lack of memory space available. Indeed, even if the switch speed is higher than the lines speed, it may happen that cells issued from different adapters have the same destination, and must be queued in the corresponding output address queue simultaneously. The switch will not have enough time in one cycle to empty its output queue. After some cycles like this, the queue/memory is full. Even though this only happens when several cells issued from different adapters are dedicated to the same output adapter during a certain time length, this case may be frequent when large packets are processed as they induce trains of cells for the same output.

In practice, a back pressure signal (BP) is sent to input adapters upon cell reception when the shared memory is full or when the cell which must be sent is destinated to a full output queue, that is when traffic congestion occurs. This signal means that the cell has been discarded at switch level and must be sent again. During the periods of back pressure input adapters must then be able to store cells before their transmission to the switch : some amount of buffering should then be provided which induces delays and jitters. On the other hand, traffic congestion situation may also occur because of a conflict of priorities at the switch entrance. In both instances, traffic congestion should be taken care of.

Objects of the Invention

One object of the invention is to provide a method for operating traffic congestion control in a data communication network.

Another object of the invention is to provide a method for managing traffic congestion situations at reasonable cost.

Still another object of this invention is to provide means for managing traffic congestion control in a network node switching system taking into consideration priority levels of traffic in a multimedia environment.

Another object of this invention is to provide means for managing traffic congestion control in a network node switching system taking into consideration predefined quality of service parameters.

Summary of the Invention

This invention deals more particularly with a method for operating traffic congestion control in a data communication network made for vehiculating data packets of different priority levels through network nodes each said nodes including switch means for switching said network data between receive adapters connected for receiving data from network node input lines and transmit adapters connected to network node output lines, said switch means including means for detecting a switch congestion condition and generate a so-called backpressure signal accordingly, and said receive adapters including routing means for routing received data into different queues based on their respective priority levels being high or low and for routing said queued data selectively at a predefined adapter speed through the switch, said method being characterized in that it includes :

- monitoring said queues to detect whether a predefined high priority queue is empty in which case a so-called spacing operation is set ON whereby said receive adapter speed for orienting data through the switch is set at a predefined low value, otherwise, should said high priority data queue, not be empty, overriding said spacing operation; and

- monitoring said switch congestion condition to detect said backpressure signal and should said spacing be ON, overriding it upon detection of said backpressure signal.

Description of the Figures

These and other objects, characteristics and advantages of the invention shall be more readily apparent, from the following description of a preferred embodiment made with reference to the accompanying drawings.

Figure 1 is schematic representation of a data communication network made to incorporate the congestion control feature of this invention.

Figure 2 is a schematic representation of the architecture of a switching node of the network of figure 1, wherein the system of this invention would be incorporated.

Figure 3 is a schematic representation of the switch fabric of figure 2.

Figure 4 is a modified schematic representation of the switching node of figure 2 made to enable implementing the invention.

Figure 5 is a general flowchart of the method according to this invention.

Figure 6 is a representation of the algorithm made to implement the invention.

Figure 7 is a schematic representation of a buffer management mechanism to be used in this invention.

Figure 8 is a block diagram showing an implementation of the invention representing more particularly the buffer management mechanism of figure 7.

Figure 9 is a flowchart for implementing one embodiment of the invention.

Detailed Description of a Preferred Embodiment of the Invention

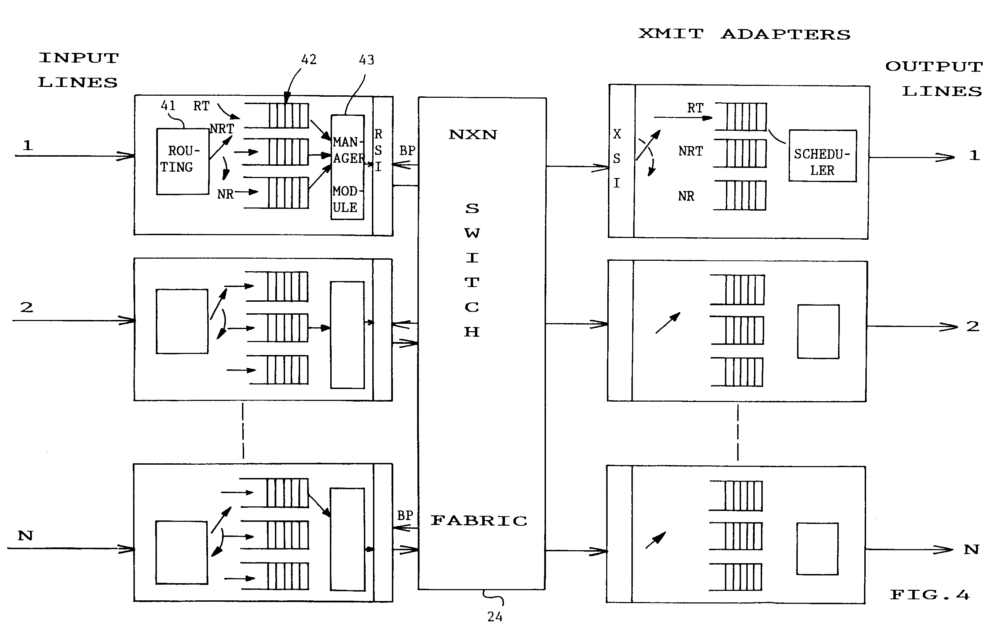

Figure 4 is derived from figure 2 as modified to implement the invention.

As represented in figure 4, the input data in each receive adapter are first organized to discriminate between the various traffics based on the already mentioned priority criteria, i. e. distinguishing between real-time (RT) data, and non-real-time data including, in the preferred embodiment as described herein, pure non-real-time data (NRT) (herein also simply referred to as non-real-time data) and non-reserved traffic (NR). To that end, each receive adapter includes a routing system (41) with a switching mechanism made to dispatch and orient the various data into their dedicated queueing system or buffers (42) i. e. for RT, NRT and NR traffics respectively. A manager module (43) is also provided to control the traffic to be oriented from the receive adapter queues (42) toward the switch fabric (24) via the receive switch interface (RSI). The man skilled in the art will obviously understand that routing and management operations are all, preferably, controlled by a dedicated software (e. g. picocode) (not represented) stored in the system and operating on a conventional or a special processor. In addition the already mentioned backpressure signal (BP) generated by the switch to signal a congestion condition, is also represented in this figure.

The use of separate queues for RT, NRT and NR traffics, respectively, avoids the queueing of RT (NRT) packet/cell after several NRT/NR cells, which is the case when only one queue is provided. With these queues, a maximum of one packet NRT/NR may have to be transmitted before a RT packet can be sent. The maximum queuing delay (and jitter) for a RT packet is given by :

$$\frac{Max - NRNRT \text{-} packet\text{-}size}{swich\ speed} \qquad (1)$$

for multiple queues, while it is given by :

$$\frac{Max - NRNRT \text{-} queue\text{-}size}{switch\ speed} \qquad (2)$$

for a single queue.

In the above relations, Max-NRNRT-packet-size and Max-NRNRT-queue-size, denote the maximum size of NR or NRT packet and the maximum size of NR or NRT queue, respectively.

One can show that in practice, the consideration of three separate queues results in a reduction by a factor 50 of the maximum jitters and delays at this level. In other words, the results given by relations (1) and (2) are in a ratio 50.

However, while multiple queuing is a way to limit the impact, on a given adapter, of low priority traffic classes over high priority classes, it does not solve the switching problem between different adapters. In other words, NRT/NR traffic issued from adapter "i" may disturb the RT traffic issued from adapter "j" in case of switch congestion.

To ensure proper transfer of information and solve the above switch congestion problems, the system is provided with a spacing mechanism so that under normal operating conditions and based on the reserved bandwidths parameters, the transmission bandwidth available shall only be partially used. In other words spacing is used to slow-down the transfer of data to the switch fabric. This enables the possibility of, subsequently, partially or totally neutralizing the spacing mechanism whenever required.

Indeed, there will be times the picocode is transferring a low priority information and a higher one arrives. In this case, the spacing mechanism shall be overriden so that the current information is transferred to the switch fabric as quickly as possible to make way for the higher priority information. This is particularly useful in the case of real-time traffic arriving when non-real-time traffic is being transferred.

Normally, when a packet is received from the line, it is stored in a buffer memory up to K kilobytes (K is a system parameter) and it is sent to the switch at the adapter internal speed, which often corresponds to the switch speed.

Whatever the line speed, a large packet results in the switch core into several cells (i.e. subdivisions of a packet) to be forwarded to the same output at a high rate (the switch speed is always higher than line speed).

Some large NRT/NR packets issued from low speed lines may then induce switch congestion and impact real-time (RT) traffic performance of the whole machine.

To limit this effect, the spacing function is implemented as follows. The cells are sent to the switch every X cycles ; the value of X mainly depends on receive line speed, and is chosen in such a way that it verifies the relation :

$$X < E \left(0.7 \, \frac{\text{switch speed}}{\text{line speed}}\right) \tag{3}$$

Wherein E(.) indicates the integer value of (.).

Spacing is only implemented for NRT and NR flows. Indeed spacing induces additionnal delays to cross the switch : NRT/NR traffics are not delay sensitive, but RT is. Also, the largest the packet, the more useful the function.

Small packets (1 cell) can only be sent from the adapter at line speed ; in the other case, when a large packet is received, the train of cells is sent after reception of the whole packet at adapter speed.

The spacing function improves the switch behavior and fairness on the overall machine, but may decrease RT performance on a given adapter. To deal with that, the case of a RT cell arriving while a NRT/NR data is being spaced must be considered: in this case, either the switch interface is multi-user and the RT cell goes directly through the switch before NRT/NR cells due to its higher level of priority, or the switch interface is mono-user and the RT cell must wait until the end of NRT/NR packet transmission. In this last case, spacing must be disabled to limit impact of NRT/NR traffic on RT traffic.

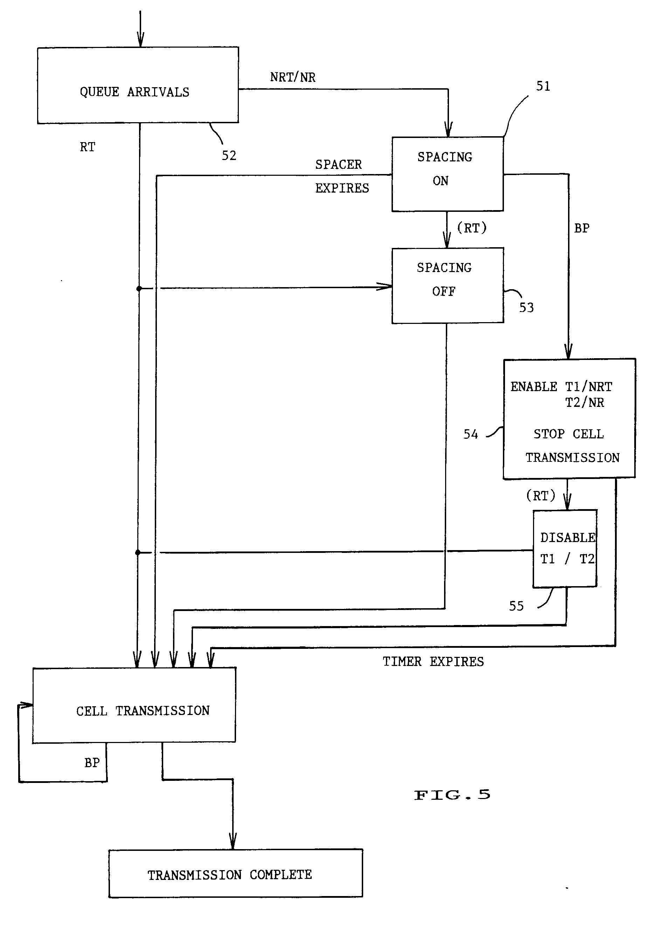

Figure 5 is a schematic representation of the basic flow-chart made to implement the above described mechanism for controlling switch congestions. Let's assume a normal switch operating at 266 Mbps with a possible reduced speed (operated through the spacing function) at 45 Mbps. The receive adapter manager module sets the spacing function ON enabling the operation at 45 Mbps (see box 51). The receive adapter manager module (43) and the corresponding receive switch interface (RSI) keep monitoring the input queues (52). Should the traffic be limited to NRT or NR data, the spacing operation is kept ON. It is turned off (53) and the switch is made to operate at 266 Mbps whenever the queues monitoring detects RT traffic.

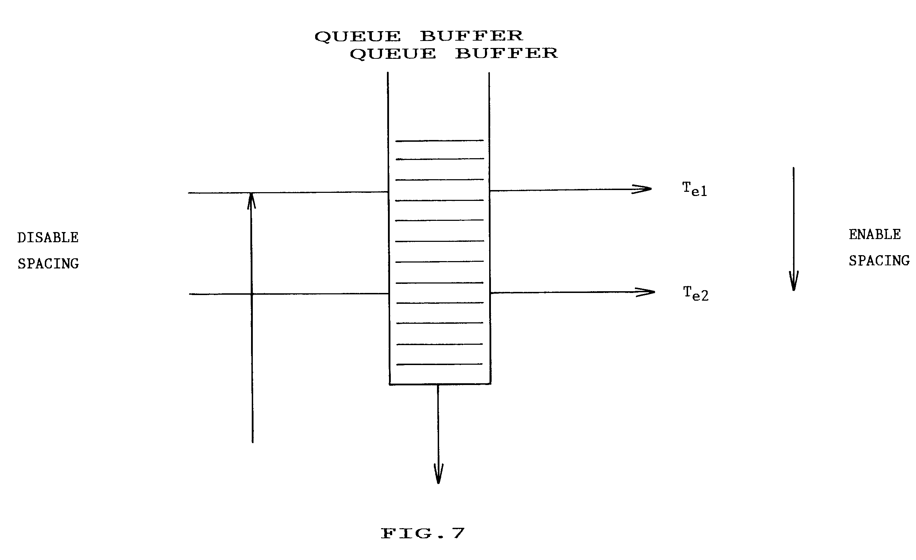

A still improved spacer mechanism may also be implemented to take into consideration the various queues levels as compared to predefined threshold values. This feature shall be considered later on in connection with figures 7 through 9.

In addition, eventhough the spacing function that has been described above already improves the steady-state switch behavior, a further improvement may be provided to the switch operation under congestion conditions. To that end, timers are provided. If a congestion occurs when a NRT/NR packet is being transmitted, a timer is set, and the transmission on the given adapter(s) is stopped for a period defined by the timer. Each adapter switch interface manager sets its timers independently, upon reception of the backpressure signal from the switch. Then, NRT and NR traffics which should induce increased congestion period are stopped at the adapter level during a while, which allows the switch to go back to a steady state behavior. The timer shall take two values T1/T2: T2 is larger than T1, to induce a "priority" between NRT and NR. Typically, T1 and T2 values should be between 1 and 10 switch cell cyles. If the timer values are too small, the switch will not be back in steady-state and the transmission of NRT/NR packets will induce again a congestion. If they are too long, the switch utilization may not be optimized and queuing may be long before transmission to the switch. The block diagram of figure 5 shows also this additional feature.

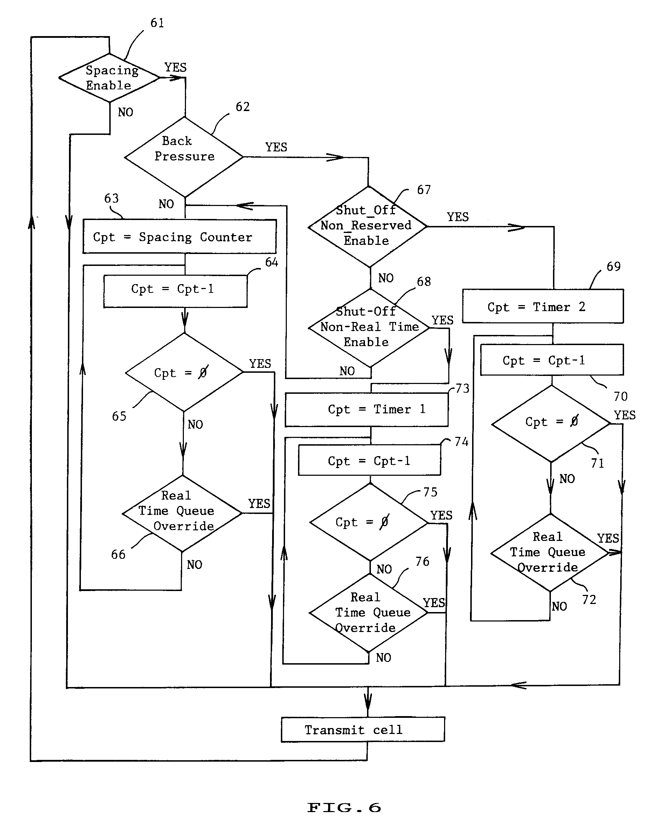

Turning back to figure 5 one may notice the enable timer operation of block 54 controlled by the backpressure signal indicating the congestion condition. Whenever the timer (T1 or T2) delay expires, a cell transmission is started. When control shows RT traffic the timers are disabled (block 55) under specific conditions already mentioned and to be described further in connection with figure 6, and again cell transmission is operated at full speed (i.e. : the spacing is disabled or overriden).

The algorithm used to control the spacing mechanism is shown in figure 6. First a test (step 61) is made to test whether spacing is ON. Should spacing be disabled, a cell is transmitted regularly. On the contrary, should spacing be ON, a test on the backpressure condition is performed (step 62). If the test answer is negative, a spacing counter is set (step 63) to a value based on the selected spacing criteria. Then the counter is periodically decremented (step 64) and its content is tested to detect a zero count condition (step 65). As long as the count is different from zero, the counter is decremented (step 64) unless an override condition due to the presence of RT traffic is detected (step 66). But should the spacing counter count be at zero, or should an override queue condition be set, a cell is transmitted.

On the other hand, assuming the result of the test of step 62 is positive, indicating the presence of a backpressure signal, a double test is performed (step 67 and 68). The first one checks whether the NR traffic is shut-off, in which case a timer 2 is set to a count T2 (step 69). Said counter is then decremented (step 70) and tested (71) until its contents is zero. Should this be the case, then a cell NR is transmitted. Otherwise the counter is decremented and the steps (70) and (71) repeated unless a real-time (RT) cell requires overriding the spacing mechanism (step 72). On the other hand, should the result of test (67) be negative, a similar test is performed on NRT shut-off condition, instead, (step 68). A mechanism similar to the mechanism described above is then operated with, now, a counter set to T1 if the result of test 68 is positive. This counter is then decremented until zero before an NRT cell is transmitted (steps 73, 74, 75), unless the presence of RT traffic (test 76) requires overriding the spacing mechanism.

One should also, however, note that, in all instances, when a real-time queue override condition occurs, the nature of the cell then transmitted, as already mentioned, depends on whether the switch interface is multi-user or mono-user. A mono-user switch interface prohibits interleaving cells from different packets during their transmission through the switch when issued from a same adapter. While in a multi-user switch interface, cells of different packets issued from a given adapter can be interleaved. In the multi-user condition, when different classes of priority are supported, a packet with a low priority can be preempted by a higher priority one. In this case, some cells from a packet are transmitted, then cells from another packet, and so on.

Accordingly, when a RT cell/packet arrives in an adapter during the transmission to the switch of a NRT/NR packet, the spacing mechanism is triggered off and in the multi-user case, the RT data cell goes directly through the switch before any NRT/NR data, based on respective priority level conditions, while in the mono-user case, the current RT cell should wait until the end of the current NRT/NR packet transmission.

The spacing function is required for large packets. Indeed, one can show that for small ones, this function is useless, and can even create congestion at the switch input queues level. For a line speed of 'M' bps, carrying 'b' bytes packets, the equivalent switch throughput (ST) necessary at switch level is :

$$ST = \frac{M \cdot SCS}{b} \cdot \left\lceil \frac{b'}{SPL} \right\rceil \qquad (4)$$

Where :

-   b' = b + OVH

-   $\lceil x \rceil$ is the smallest integer larger than x,

-   SCS is the size (in bytes) of the switch cell

-   SPL is the maximum number of bytes issued from the adapter, transmitted in a single switch cell (switch payload) or in other words, the useful portion of SCS.

-   OVH is an overhead representing the number of bytes added to the packet issued from the line in the input adapter (CRC, routing informations, ...)

For example, assuming a line at 52 Mbps, an overhead of 14 bytes, a switch payload of 48 bytes and a switch cell of 58 bytes, the equivalent switch throughput ranges from 430 Mbps to 63 Mbps for packet sizes ranging from 7 to 2048 bytes. It is clear that for a small packet size, X must be reduced to 1, while the formula given previously fits for large packets.

In order to avoid this problem, the already mentioned threshold controlled mechanism is implemented in the adapter: switch input queues sizes are monitored and as soon as the number of cells queued reaches a threshold Tel, spacing is disabled ; when a threshold Te2 is reached, the spacing is enabled again. Figure 7 represents this mechanism.

In the preferred embodiment of this invention, threshold controlled spacing mechanism has been improved by being implemented with more than two prespecified threshold levels, with a predefined spacing ratio being assigned to each threshold condition.

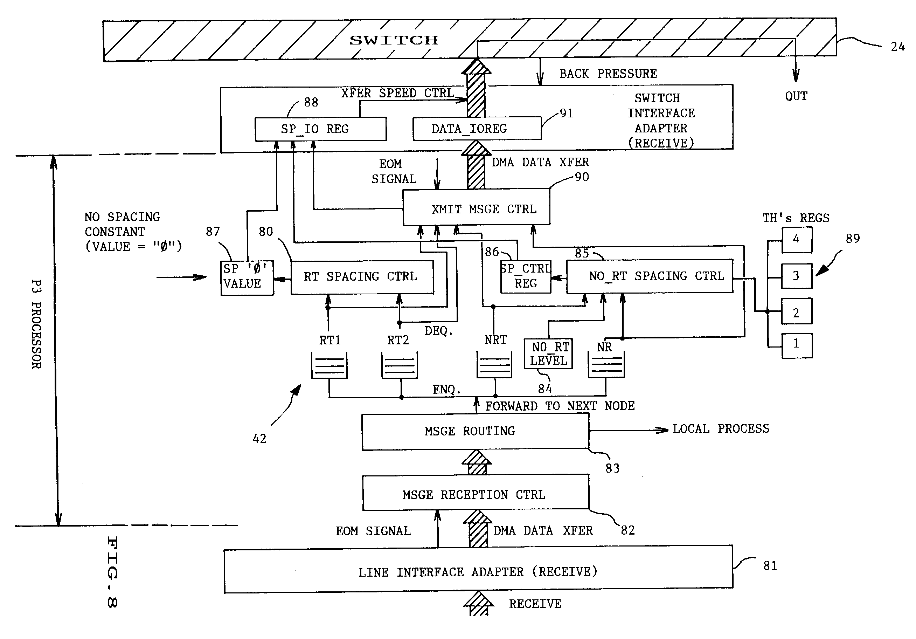

Figure 8 is a block diagram showing an implementation of the threshold controlled spacing mechanism using four threshold levels. This figure also provides a more detailed description of the receive adapter (see figure 4) of the system.

Accordingly, the routing device (see 41 in figure 4) is represented as including a Line Interface Adapter (81) implementing the conventional packet reassembly operations, whereby DMA data and end of message (EOM) signal are prepared and forwarded to a Message Reception Control (MSGE Reception CTRL) device (82) wherein the message is controlled prior to being forwarded to a Message Routing device (83). Should the message include errors, it is discarded (i.e not forwarded to the switch) by the message routing device (83). The message may also terminate in the local node in which case it should also no be forwarded to the switch. That may be the case for a network control message destinated to this specific node as already mentioned, during connection set-up, or in topology information broadcast.

The receive adapter queuing (see 42 in figure 4) has been implemented in the system of figure 8 to process the above considered non-real-time (NRT), non-reserved (NR) and real-time (RT) traffics, with real-time traffic including RT1 and RT2, with the highest priority being assigned to RT1, next highest priority being assigned to RT2, then NRT and finally NR. A counter (NO_RT Level) (84) connected to both NRT and NR queues is used to indicate the total number of message bytes in both NRT and NR queues. This counter is incremented at message reception (enqueue time) and decremented at message transmission (dequeue time).

While all enqueuing (ENQ) operations are controlled by the message routing device (83), dequeuings are represented as being operated separatly in an RT Spacing CTRL device (80) for both RT1 and RT2 traffics and in a device NO_RT Spacing CTRL (85) for NRT and NR traffics. One should however understand that these operations are all operated, as already mentioned, in the same program controlled processor herein designated as P3 processor. The NO_RT Spacing CTRL device (85) is connected to an SP_CTRL register (86) containing the values of spacing (coded 0 through 4) to be used for sending Non-real-time messages to the switch. In the preferred embodiment of this invention, "0" corresponds to full speed (i. e. 266 Mbps), and "1", "2", "3" and "4" correspond to 4/5, 3/5, 2/5 and 1/5 of full speed, respectively. As already mentioned, real-time traffic shall be transferred at "0" spacing (see 87). The spacing values "0" through "4", stored into (86) or (87) are to be set into a switch interface I/O register SP_IOREG (88). Also, as already mentioned four threshold values (numbered TH1, TH2, TH3 and TH4) have been defined and stored into TH's Registers (89). In the preferred embodiment, these thresholds have been selected to be set at 10 Mbps, 15 Mbps, 20 Mbps and 25 Mbps for TH1, TH2, TH3 and TH4 respectively. But means are provided for enabling the network designer to configure these values at will.

The queued data are dequeued through a "transmit message" control device (XMIT MSGE CTRL) (90) in DMA form, and then forwarded to the switch via a register (DATA_IOREG) (91) located in the receive switch interface adapter. The rate for transferring the data from the DATA_IOREG to the switch is controlled by the SP_IOREG content. In other words, spacings and spacing overridings are controlled by register SP_IOREG.

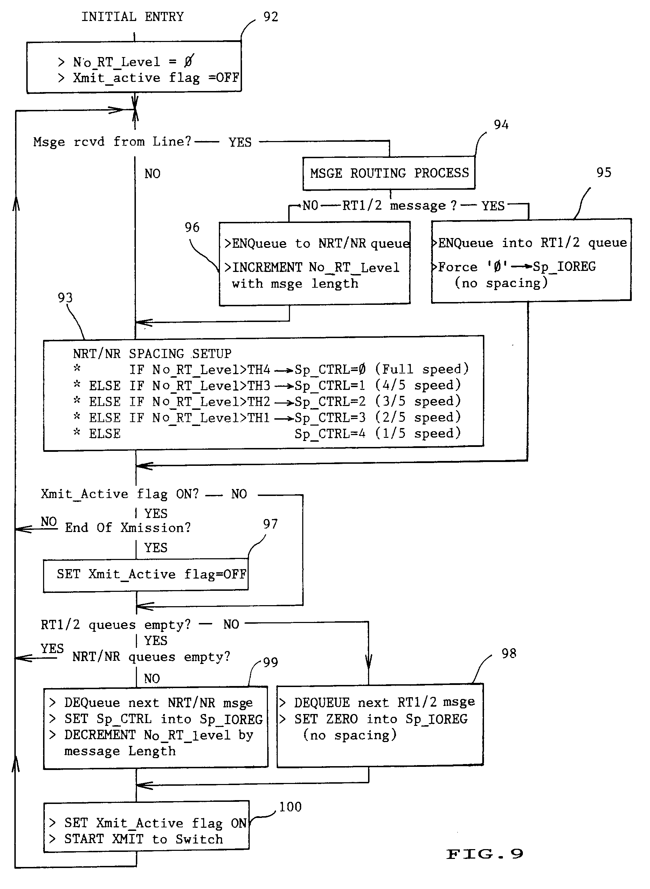

Represented in figure 9 is the spacing control flowchart as implemented to take into consideration the four threshold levels as defined above. Upon initial entry, the total number of bytes present in both NRT and NR queues is zero and a flag (Xmit_active flag), indicating whether a message is being transmitted to the receive switch interface (RSI), is set OFF to indicate that no message is being transmitted (step 92). The message reception control is operated to test whether a message is received from an input line. In case of negative answer, the NRT/NR spacing mechanism is set-up (step 93) to its desired value by testing the No_RT_Level with the following algorithm :

IF No_RT_Level > TH4 ==> Sp_CTRL=0 (Full speed)
ELSE IF No_RT_Level > TH3 ==> Sp_CTRL=1 (4/5 speed)
ELSE IF No_RT_Level > TH2 ==> Sp_CTRL=2 (3/5 speed)
ELSE IF No_RT_Level > TH1 ==> Sp_CTRL=3 (2/5 speed)
ELSE ==> Sp_CTRL=4 (1/5 speed)

If a message is received from the line, a message routing process is started (94) by first checking whether it is a real-time message. If this is the case, the message is enqueued into RT1 or RT2 buffer according to the received data, and the switch interface I/O register (Sp_IOREG) content is forced to "0" (step 95) and the process goes to the step wherein the flag, indicating whether a message is being transmitted to the switch interface, is tested. Otherwise, if the received message is not a real-time message, it is enqueued to NRT or NR queues and the counter No_RT_Level is incremented (step 96), then the process goes to step 93 and then goes to checking whether the Xmit_Active flag is ON. If said flag is ON, the process checks for end of transmission. If this is not the case, the process loops back to checking whether a message is received from the line. In case of end of transmission, the Xmit_Active flag is set OFF (step 97). Once this flag is set OFF or should this setting-OFF be indicated by the test performed on said flag, a test is performed on RT1/RT2 queues contents. If both are empty, then a test is performed on NRT/NR queues, should these be also empty, the process goes back to check whether a message is received from the line. If either RT1 or RT2 queues are not empty, these are read out and the SP_IOREG contents is set to "0" (step 98). Otherwise, should the test to check whether either one of queues were empty provided a negative answer, the next NRT/NR message would be extracted from the corresponding queue(s), the content of Sp_CTRL register would be transferred into Sp_IOREG and the counter No_RT_Level content would be decremented by the considered message length (step 99). Then both steps 98 and 99 connect to step 100 wherein the flag indicating whether a message is being transmitted to the switch interface is set ON and transmission to the switch starts.

## Claims

1. A method for operating traffic congestion control in a data communication network made for vehiculating data packets of different priority levels through network nodes each said nodes including switch means for switching said network data between receive adapters connected for receiving data from network node receive lines and transmit adapters connected to network node output lines, said switch means including means for detecting a switch congestion condition and for generating a so-called backpressure signal accordingly, and said receive adapters including routing means for routing received data into different queues based on their respective priority levels being high or low and for routing said queued data selectively at a predefined adapter speed through the switch, said method being characterized in that it includes :

   - monitoring said queues to detect whether a predefined high priority queue is empty in which case a so-called spacing operation is set ON whereby said receive adapter speed for orienting data through the switch is set at a predefined low value, otherwise, should said high priority data queue not be empty, overriding said spacing operation ; and

   - monitoring said switch congestion condition to detect said backpressure signal and should said spacing be ON, overriding it upon detection of said backpressure signal.

2. A method for operating traffic congestion control according to claim 1 wherein said high priority level is assigned to so-called real-time (RT) traffic and lower priorities are assigned to non-real-time traffic.

3. A method for operating traffic congestion control according to claim 2 wherein said real-time traffic includes voice traffic.

4. A method for operating traffic congestion control according to claim 2 wherein said real-time traffic includes video data traffic.

5. A method for operating traffic congestion control according to claim 3 or 4 wherein said low priority data include so-called non-real-time data.

6. A method for operating traffic congestion control according to claim 5 wherein said non-real-time data include pure non-real-time (NRT) data and/or so-called non-reserved (NR) data.

7. A method for operating traffic congestion control according to claim 6 wherein the relative priorities between so-called NRT data and NR data are taken care of through the use of timers T1 and T2 respectively, said timers defining the respective rates of data transmissions through the switch.

8. A method for operating traffic congestion control according to claim 7 wherein said queues monitoring operation is used to disable T1/T2 timers whenever real-time (RT) traffic is detected.

9. A method for operating traffic congestion control according to claim 8 wherein said T1/T2 disabling is operated immediately upon RT traffic detection in the receive adapter queue in a so-called multi-user environment operation of the network.

10. A method for operating traffic congestion control according to claim 8 wherein, upon real-time (RT) traffic detection in the receive adapter queue, said spacing mechanism is overriden while real-time traffic is delayed until the end of the current packet transfer through the switch in a so-called mono-user environment operation of the network.

11. A method for operating traffic congestion control according to any one of claims 1 through 10 wherein said spacing is set to a value X according to the formula :

# EP 0 706 297 A1

$$X < E \left( 0.7 \, \frac{\text{switch speed}}{\text{line speed}} \right)$$

Wherein E(.) indicates the integer value of (.).

12. A method for operating traffic congestion control according to any one of claims 1 through 10 wherein said spacing function is overriden for a traffic involving small size data packets.

13. A method for operating traffic congestion control according claim 12 wherein said overriding of the spacing function is made traffic dependent by including:

- defining and storing so-called adapter threshold levels for the switch input queue sizes ;

- monitoring said switch input queues contents, comparing said monitored input queue content to said stored threshold levels and should said queue content be lower than a predefined threshold level, setting said spacing function ON, or should said queue content be higher than another one of said predefined threshold levels, overriding said spacing operation.

14. A method for operating traffic congestion control according claim 12 wherein said overriding of the spacing function is made traffic dependent by including:

- defining and storing so-called adapter threshold levels for the switch input queue sizes ;

- defining and storing an operating speed whereby defining a correlative spacing value for each said stored thresholds;

- monitoring said switch input queues contents, comparing said monitored input queue content to said stored threshold levels and should said queue content be lower than a predefined threshold level, setting said spacing function according to the corresponding predefined operating speed.

15. A system for operating traffic congestion control in a data communication network node switch (24) made for switching data packets of different priority levels including real-time (RT) data, non-real-time (NRT) data and non-reserved (NR) data, between receive adapters connected to node input lines and transmit adapters connected to node output lines, each said receive adapters being characterized in that it includes :

- individual buffer means (42) for queuing separately each said RT, NRT and NR data

- a routing system (41) monitoring the node input line and dispatching the line traffics into their dedicated buffers respectively,

- manager module means for monitoring said RT, NRT and NR queues and for selectively applying said queues contents to node switch means (24) through receive switch interface means (RSI),

- means for detecting traffic congestion into said switch (24) and for generating a so-called backpressure signal (BP) signalling said congestion condition to said receive adapter,

said manager module (43) being further characterized in that it includes a so-called spacing mechanism for applying the receive adapter queued data to the switch (24) at a predefined reduced speed, and means in said manager module monitoring means sensitive to said RT queue contents and to said backpressure signal (BP) for selectively overriding said spacing mechanism operation accordingly.

16. A system for operating traffic congestion control according to claim 15, further characterized in that it includes buffer register means (89) for storing predefined queues threshold values (1, 2, 3 or 4), means (86, 87) for assigning and storing a predefined spacing value to each said threshold values respectively, means for monitoring said queues (84, 85, 88) contents and for setting said spacing mechanism according to said queues contents with respect to said threshold values.

17. A system for operating traffic congestion control according to claim 15 or 16 further including :

- a first counter T1 assigned as timer for NRT data transfers ;

- a second counter T2 assigned as timer for NR data transfers ;

- means sensitive to said backpressure (BP) signal to enable said timers to control the rates of NRT/NR data transfers to the switch, whereby inducing a priority discrimination between NRT and NR traffics, respectively.

FIG. 1

RECEIVE (RCV) ADAPTERS

TRANSMIT (XMIT) ADAPTERS

FIG.2

EP 0 706 297 A1

SWITCH FABRIC

FIG. 3

INPUT LINES

XMIT ADAPTERS

OUTPUT LINES

42 43

41 RT

ROU-TING

NRT

NR

MANAGER MODULE

RSI

BP

NXN SWITCH

FABRIC

XSI

RT

NRT

NR

SCHEDULER

24

FIG.4

EP 0 706 297 A1

15

FIG.5

FIG.6

QUEUE BUFFER
QUEUE BUFFER

DISABLE

SPACING

ENABLE

SPACING

$T_{e1}$

$T_{e2}$

FIG.7

EP 0 706 297 A1

FIG.8

INITIAL ENTRY _____ 92

```
> No_RT_Level = Ø
> Xmit_active flag =OFF
```

Msge rcvd from Line? —— YES ————————————————

NO

MSGE ROUTING PROCESS _____ 94

95

┌─NO —— RT1/2 message ? —— YES─┐

96

```
>ENQueue to NRT/NR queue
>INCREMENT No_RT_Level
 with msge length
```

```
>ENQueue into RT1/2 queue
>Force 'Ø' ——►Sp_IOREG
 (no spacing)
```

93

```
NRT/NR SPACING SETUP
*      IF No_RT_Level>TH4 ──►Sp_CTRL=Ø (Full speed)
* ELSE IF No_RT_Level>TH3 ──►Sp_CTRL=1 (4/5 speed)
* ELSE IF No_RT_Level>TH2 ──►Sp_CTRL=2 (3/5 speed)
* ELSE IF No_RT_Level>TH1 ──►Sp_CTRL=3 (2/5 speed)
* ELSE                        Sp_CTRL=4 (1/5 speed)
```

Xmit_Active flag ON? —— NO ——————————

| YES

NO End Of Xmission?          97

| YES

```
SET Xmit_Active flag=OFF
```

RT1/2 queues empty? — NO ————————————

| YES

YES NRT/NR queues empty?     99

| NO

98

```
> DEQueue next NRT/NR msge
> SET Sp_CTRL into Sp_IOREG
> DECREMENT No_RT_level by
 message Length
```

```
> DEQUEUE next RT1/2 msge
> SET ZERO into Sp_IOREG
 (no spacing)
```

100

```
> SET Xmit_Active flag ON
> START XMIT to Switch
```

**FIG.9**

## EUROPEAN SEARCH REPORT

European Patent Office

**Application Number**

EP 94 48 0097

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO-A-93 20637 (STRATACOM)<br>* page 18, line 3 - line 8 *<br>* page 20, line 13 - line 17 *<br>* page 22, line 22 - page 24, line 16 *<br>* page 25, line 24 - line 25; figures 7,8 * | 1-6,15 | H04Q11/04<br>H04L12/56 |
| A | COMPUTER NETWORKS AND ISDN SYSTEMS,<br>vol.26, no.9, May 1994, AMSTERDAM NL<br>pages 1187 - 1213, XP445890<br>H.BADRAN ET AL. 'ATM switch architecture<br>with input-output-buffering: effect of<br>input traffic correlation, contention<br>resolution policies, buffer allocation<br>strategies and delay in backpressure<br>signal'<br>* paragraph 3; figure 4 *<br>* paragraph 6 * | 1,15 | |
| A | IEEE INFOCOM'93 THE CONFERENCE ON COMPUTER COMMUNICATIONS,<br>vol.3, 28 March 1993, SAN FRANSISCO,US<br>pages 1330 - 1336, XP419698<br>F. BERNABEI ET AL. 'Analysis of ON-OFF<br>Source Shaping for ATM Multiplexing'<br>* paragraph 2 * | 1-17 | **TECHNICAL FIELDS SEARCHED (Int.Cl.6)**<br><br>H04Q<br>H04L |
| A | IEICE TRANSACTIONS,<br>vol.E75-B, no.11, November 1992, TOKYO JP<br>pages 1199 - 1207, XP336076<br>H. INAI ET AL. 'Rate-based Congestion<br>Control in High Speed Packet-Switching<br>Networks'<br>* paragraph 2 * | 1-17 | |
| A | EP-A-0 609 114 (THOMPSON-CSF)<br>* abstract * | 1-17 | |

The present search report has been drawn up for all claims

| Place of search | Date of completion of the search | Examiner |
|---|---|---|
| THE HAGUE | 14 March 1995 | Staessen, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)